# EUROPÄISCHE PATENTSCHRIFT

(11) **EP 3 032 087 B1**
(45) Veröffentlichungstag und Bekanntmachung des Hinweises auf die Patenterteilung: **30.01.2019**
(21) Anmeldenummer: 15192609.4
(22) Anmeldetag: 02.11.2015
(51) Int. Cl.: F02M 57/00, G01L 9/00, G01L 19/14, G01L 23/10

(54) **INJEKTOR**
INJECTOR
INJECTEUR

(30) Priorität: 09.12.2014 DE 102014225296
(43) Veröffentlichungstag der Anmeldung: 15.06.2016
(73) Patentinhaber: ROBERT BOSCH GMBH, 70442 Stuttgart (DE)
(72) Erfinder: Melcher, Reinhold, 91077 Neunkirchen A. Brand (DE); Fischer, Fabian, 70176 Stuttgart (DE); Forke, Martin, 70499 Stuttgart (DE)

(56) Entgegenhaltungen:
- EP-A1- 1 118 849
- EP-A2- 2 110 540
- DE-A1-102005 047 091
- DE-A1-102008 055 053
- DE-T2- 3 880 263
- GB-A- 2 205 654
- US-A- 6 030 480

## Beschreibung

Die vorliegende Erfindung betrifft einen Injektor aufweisend einen Injektorkörper sowie einen Düsenkörper, wobei ein mittels einer Verklebung an dem Injektor befestigter Sensor zur Aufnahme einer Verformung einer Wandfläche des Injektors vorgesehen ist.

### Stand der Technik

Ein derartiger Injektor ist aus der DE 10 2005 053 683 A1 bekannt. Dieser Injektor weist einen Düsenkörper mit einer in einer Bohrung geführten Düsennadel auf. Die Düsennadel greift mit einer Düsenspitze in einen Düsenkörpersitz ein, wobei die Düsennadel bei einer Öffnungsbewegung eine Düsenöffnung freigibt, durch die ein durch eine Hochdruckleitung in dem Injektor geführtes Medium gespritzt wird. Der Injektor ist ein Kraftstoffinjektor und das Medium ist ein Kraftstoff, beispielsweise Dieselkraftstoff. Durch die Öffnungsbewegung oder Schließbewegung der Düsennadel wird eine Druckveränderung des Kraftstoffs hervorgerufen, der durch eine Hochdruckleitung in dem Injektor geführt wird. Diese Druckänderung bewirkt eine Verformung einer Wandfläche des Injektors, wobei die Verformung von einem als Dehnungssensor ausgebildeten Sensor erfasst wird, der außen in nicht näher definierter Weise an dem Injektor angeklebt ist. Ein weiterer Injektor mit einem Sensor ist aus der DE102008055053 bekannt.

Der Erfindung liegt die Aufgabe zugrunde, einen Injektor mit einem Sensor zur Bestimmung einer Verformung einer Wandfläche des Injektors anzugeben, der hinsichtlich seiner Steuerbarkeit und damit seiner Funktion insgesamt verbessert ist.

### Offenbarung der Erfindung

Diese Aufgabe wird dadurch gelöst, dass die Verklebung eine Mantelverklebung ist. Dabei ist die Mantelverklebung eine gegenüber einer herkömmlichen Verklebung verbesserte Verklebung, die eine vergrößerte Kontaktfläche zwischen dem Injektor und dem Sensor aufweist. Die Mantelverklebung umfasst erfindungsgemäß die gesamte Kontaktfläche zwischen der Bodenwand des Sensors und der zugewandten Wandfläche des Injektors und zumindest eine Teilfläche einer Seitenwand des Sensors. Dadurch, dass die Mantelverklebung ausgehend von einer erweiterten Wandfläche des Injektors zu der Kontaktfläche zwischen der Bodenwand und der direkt zugewandten Wandfläche an zumindest einer Seitenwand des Sensors hochgezogen ist, wird die Kontaktfläche zwischen dem Injektor und dem Sensor vergrößert. Dementsprechend wird eine Verformung, insbesondere Dehnung oder Stauchung, einer Wandfläche des Injektors umfassender oder intensiver auf den Sensor übertragen, so dass dieser ein besseres beziehungsweise stärkeres elektrisches Signal erzeugen kann. Diese bessere Übertragung der von dem Injektor ausgehenden Dehnung oder Stauchung auf den Sensor erhöht das von dem Sensor erzeugte elektrische Signal. Dadurch wird die Steuerbarkeit des Injektors mit dem daran angebrachten Sensor verbessert. Hierbei ist zu berücksichtigen, dass der Injektor hinsichtlich seiner Funktion, beispielsweise des Beginns, der Dauer und der Beendigung einer von dem Injektor vorgenommenen Einspritzung oder Injektion von einer (elektrischen) Steuereinrichtung gesteuert wird. Dieser Steuereinrichtung wird das verbesserte Signal zur Auswertung und Weiterverarbeitung zugeführt.

Der Sensor wird durch Aufbringen einer (Druck-)Spannung auf die Mantelverklebung - insbesondere während eines Aushärtevorgangs der Mantelverklebung - auf Druck vorgespannt. Die so erzeugte Vorspannung führt zu einer Verbesserung der Funktion und der Haltbarkeit des Sensors. Insbesondere, wenn die Mantelverklebung auch die der Bodenwand gegenüberliegenden Deckenwand umfasst, so dass der Sensor vollständig von der Mantelverklebung umfasst ist, kann die Vorspannung durch den Einsatz eines entsprechenden die Spannung bewirkenden Spannwerkzeugs erzeugt werden. Nach dem Aushärtevorgang wird das Spannwerkzeug abgenommen und der Sensor ist wie gewünscht vorgespannt. Dabei ist die Mantelverklebung nach dem Aushärtevorgang steif.

Steif bedeutet in diesem Zusammenhang, dass die Bewegungen, insbesondere die Dehnungen des Injektors, unvermindert auf den Sensor übertragen werden. Mit anderen Worten finden keine Relativbewegungen zwischen dem Injektor und dem Sensor statt.

In weiterer Ausgestaltung der Erfindung ist die Mantelverklebung an zwei gegenüberliegenden Seitenwänden zumindest über eine Teilfläche beziehungsweise Teilhöhe der entsprechenden Seitenwände des Sensors angeordnet. Dadurch ist eine weitere Verbesserung der Übertragung einer Dehnung auf den Sensor ermöglicht. Eine weitere Ausgestaltung sieht vor, die Mantelverklebung an allen Seitenwänden des Sensors über deren gesamte Höhe anzuordnen. Dadurch ist eine umfassende Verbindung zwischen dem Injektor und dem Sensor hergestellt, die eine nochmals verbesserte Übertragung einer Verformung einer Wandfläche durch eine Dehnung oder Stauchung und somit eine weiter verbesserte Signalerzeugung bewirkt. Zudem ist dadurch der Sensor vor einer von außen auf eine Seitenwand einwirkenden Beschädigung geschützt.

In weiterer Ausgestaltung der Erfindung ist der Sensor quaderförmig, zylinderförmig oder halbkugelförmig ausgebildet. Dies sind bevorzugte Ausgestaltungen, die jeweils neben der Bodenwand zumindest eine Seitenwand umfassen. Neben den zuvor angegebenen Ausgestaltungen des Sensors sind aber auch noch andere Formgebungen möglich.

In Weiterbildung der Erfindung ist der Sensor in eine Ausnehmung in dem Injektor eingesetzt. Diese Ausgestaltung ermöglicht es, die Mantelverklebung bei einer entsprechenden Dimensionierung der Ausnehmung in einfacher Weise an einer oder mehreren Seitenwänden (und gegebenenfalls der Deckenwand) des Sensors anzubringen. Umgekehrt ist es aber durch die erfindungsgemäße Ausgestaltung auch möglich, die Wandstärke des Injektors zu erhöhen und dennoch eine Signalstärke zu erreichen, die bei einem herkömmlichen Injektor mit geringerer Wandstärke und einer herkömmlichen Verklebung erzeugt wird. Durch die Erhöhung der Wandstärke kann beispielsweise die Funktionssicherheit und/oder Haltbarkeit des Injektors verbessert bzw. erhöht werden.

In weiterer Ausgestaltung der Erfindung weist der Düsenkörper eine eine Düsennadel aufnehmende Bohrung auf, wobei die Düsennadel in der Bohrung translatorisch bewegbar ist, und eine mit einem Düsenkörpersitz zusammenwirkende Düsennadelspitze aufweist, wobei dem Düsenkörpersitz zumindest eine Düsenöffnung zugeordnet ist, die gesteuert von der Düsennadel mit einer Hochdruckleitung für ein in dem Injektorkörper und dem Düsenkörper geführtes Medium verbunden ist. Dies ist eine bevorzugte Ausgestaltung des Injektors, an dem der Sensor mit der erfindungsgemäßen Mantelverklebung befestigt ist.

In Weiterbildung der Erfindung grenzt die mit dem Sensor zusammenwirkende Wandfläche des Injektors an die Hochdruckleitung an. Dadurch ist eine direkte Übertragung einer auf die Wandfläche durch eine Druckpulsation in der Hochdruckleitung bewirkte Dehnung oder Stauchung auf den Sensor gewährleistet. Im Übrigen kann die Wandfläche Teil des Injektorkörpers und/oder des Düsenkörpers des Injektors sein.

In weiterer Ausgestaltung der Erfindung ist die als Membran wirkende Wandfläche zumindest angenähert parallel zu der Hochdruckleitung ausgerichtet. Durch diese Ausgestaltung ist eine gute Übertragung der Verformung auf den Sensor gewährleistet.

In weiterer Ausgestaltung der Erfindung ist der Injektor ein Kraftstoffinjektor und das Medium Kraftstoff. Wenn auch der Gegenstand der Erfindung bei einem beliebigen Injektor angewendet werden kann, ist die bevorzugte Anwendung bei einem Kraftstoffinjektor gegeben. Ein solcher Kraftstoffinjektor ist Teil eines Kraftstoffeinspritzsystems, mit dem Kraftstoff, beispielsweise Dieselkraftstoff, in einen Brennraum einer Brennkraftmaschine eingespritzt wird.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind.

Es zeigen:
- Figur 1: eine Seitenansicht eines Injektors mit einem teilweisen Längsschnitt durch den Injektor und einer Darstellung einer Positionierung eines Sensors an dem Injektor;
- Figur 2: eine teilweise Schnittdarstellung durch einen Injektor und einen über eine Mantelverklebung mit dem Injektor verbundenen Sensor in einer Neutralstellung;
- Figur 3, 3a: eine Schnittdarstellung gemäß Figur 2 in einer Dehnungsstellung im Vergleich zu einer herkömmlichen Ausgestaltung; und
- Figur 4, 4a: eine Detailansicht einer Mantelverklebung zwischen einem Injektor und einem Sensor mit einer Darstellung der übertragbaren Dehnung im Vergleich zu einer herkömmlichen Ausgestaltung.

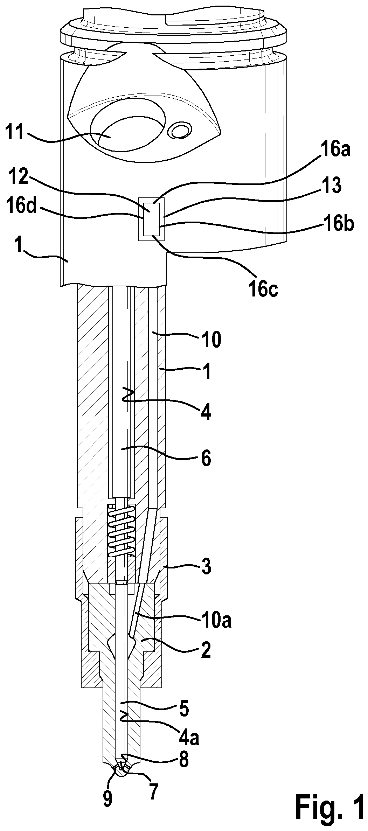

Der in Figur 1 dargestellte Injektor ist ein Kraftstoffinjektor, mit dem unter Druck stehender Kraftstoff, der beispielsweise einem Hochdruckspeicher eines Common-Rail-Einspritzsystems entnommen wird, in einen Brennraum einer Brennkraftmaschine, an der das Einspritzsystem verbaut ist, eingespritzt wird. Dabei ist der Kraftstoff insbesondere Dieselkraftstoff und die Brennkraftmaschine eine selbstzündende Brennkraftmaschine. Der Kraftstoffinjektor weist einen Injektorkörper 1 auf, der mit einem Düsenkörper 2 mittels einer Überwurfmutter 3 verschraubt ist. In dem Injektorkörper 1 und dem Düsenkörper 2 ist eine Bohrung 4, 4a eingearbeitet, in der eine Düsennadel 5 und eine mit der Düsennadel 5 zusammenwirkende Betätigungsstange 6 axial beweglich angeordnet sind. In einer Schließstellung der Düsennadel 5 wirkt eine Düsennadelspitze 7 der Düsennadel 5 mit einem Düsenkörpersitz 8 zusammen und verschließt zumindest eine Düsenöffnung 9, die in dem Düsenkörper 2 unterhalb des Düsenkörpersitzes 8 angeordnet ist.

In einer Öffnungsstellung der Düsennadel 5 befindet sich die Düsennadelspitze 7 in einer beabstandeten Stellung zu dem Düsenkörpersitz 8 und gibt dann eine Strömungsverbindung durch eine in den Injektorkörper 1 und den Düsenkörper 2 eingelassene Hochdruckleitung 10, 10a zu der zumindest einen Düsenöffnung 9 frei. In dieser Stellung wird beispielsweise aus dem Hochdruckspeicher in die Hochdruckleitung 10, 10a eingebrachter Kraftstoff durch die zumindest eine Düsenöffnung 9 in den zugeordneten Brennraum der Brennkraftmaschine eingespritzt.

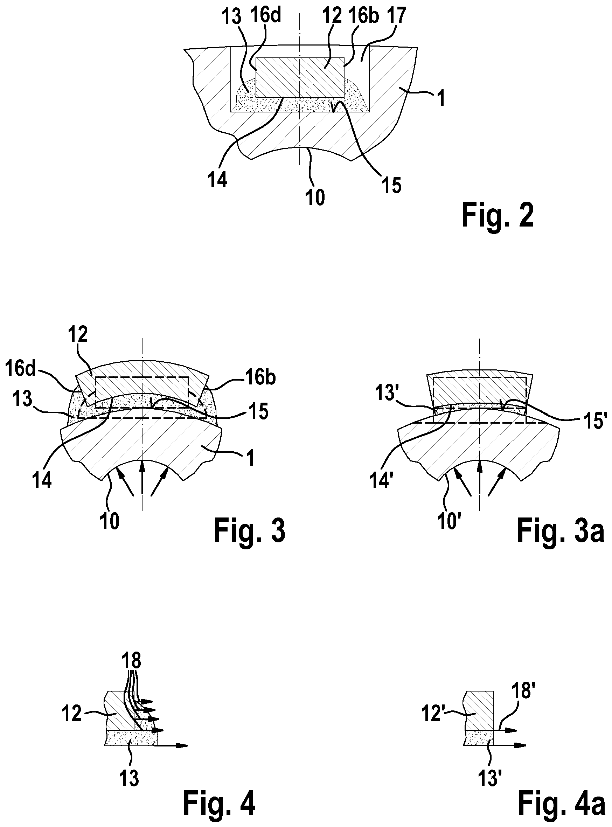

Die Düsennadel 5 wird über die Betätigungsstange 6 von einem in den Injektorkörper 1 eingebauten Aktor direkt oder indirekt in die Öffnungsstellung und die Schließstellung verstellt, wobei zur Herstellung einer elektrischen Verbindung zwischen dem Aktor und einem Steuergerät eine Steuerleitung vorhanden ist, die durch eine Aktorkabelbohrung 11 in dem Injektorkörper 1 geführt ist. Unterhalb der Aktorkabelbohrung 11 ist ein vorzugsweise piezokeramischer Sensor 12 mittels einer Mantelverklebung 13, die nachfolgend noch genauer erläutert wird, an dem Injektorkörper 1 befestigt. Der Sensor 12 ist vorzugsweise angrenzend an die Hochdruckleitung 10 an einer parallel zu der Hochdruckleitung 10 ausgerichteten Wandfläche 15 (Fig. 2) des Injektorkörpers 1 angeordnet. Bei dem Ausführungsbeispiel gemäß Figur 1 ist der Sensor 12 an der Außenwand des Injektorkörpers 1 angeordnet. Weiterhin ist in dem dargestellten Ausführungsbeispiel die Mantelverklebung 13 zusätzlich zu der gesamten Kontaktfläche zwischen einer Bodenwand 14 des Sensors 12 und der zugewandten Wandfläche 15 des Injektorkörpers 1 an allen vier Seitenwänden 16a, 16b, 16c, 16d des beispielsweise quaderförmig ausgebildeten Sensors 12 angeordnet. Neben einer quaderförmigen Ausgestaltung kann der Sensor 12 aber auch eine zylinderförmige, halbkugelförmige oder sonstige Form aufweisen. In einer alternativen Ausgestaltung kann die Mantelverklebung 13 aber auch nur an einer einzigen Seitenwand 16 oder aber an zwei gegenüberliegenden Seitenwänden 16a, 16c oder 16b, 16d angeordnet sein.

Figur 2 zeigt einen Schnitt durch den Injektorkörper 1 im Bereich der Anordnung des Sensors 12. Bei diesem Ausführungsbeispiel ist in den Injektorkörper 1 eine Ausnehmung 17 eingelassen, in die der Sensor 12 mittels der Mantelverklebung 13 eingesetzt ist. Die Ausnehmung 17 ist im Bereich der Hochdruckleitung 10 angeordnet und weist eine Wandfläche 15 auf, die als Membran wirkt und zumindest angenähert parallel zu der Hochdruckleitung 10 ausgerichtet ist. Die Mantelverklebung umfasst die gesamte Kontaktfläche zwischen der Bodenwand 14 des Sensors 12 und der zugewandten Wandfläche 15 des Injektorkörpers 1 bzw. der Ausnehmung 17. Zusätzlich umfasst die Mantelverklebung in etwa die halbe Teilfläche bzw. Teilhöhe der Seitenwände 16b, 16d des Sensors. Durch diese Ausgestaltung wird die Kontaktfläche zwischen dem Injektorkörper 1 und dem Sensor 12 erhöht. Dadurch kann eine durch eine Druckpulsation in der Hochdruckleitung 10 hervorgerufene Dehnung in dem Injektorkörper 1 bzw. insbesondere in der Wandfläche 15 in einem erhöhten Maß auf den Sensor 12 übertragen werden, so dass dieser durch die erfahrene erhöhte Dehnung ein höheres elektrisches Signal erzeugt.

Ein solcher Dehnungszustand ist in Figur 3 dargestellt. Diese Darstellung ist zur deutlichen Darstellung des erreichten Effekts überzogen dargestellt. Die dargestellten Pfeile geben von dem in der Hochdruckleitung 10 pulsierenden Kraftstoff hervorgerufene Dehnungen in dem Injektor wieder, die sich auf den Injektorkörpers 1 bzw. insbesondere auf die Wandfläche 15 übertragen. Demzufolge weist die im Ruhezustand ebene Wandfläche 15 bei einer Dehnung eine gebogene Oberfläche auf. Durch die Mantelverklebung 13 wird diese Dehnung auch auf die Seitenwände 16b, 16d des Sensors 12 übertragen, so dass die auf den Sensor 12 übertragene Dehnung deutlich größer ist, als dies bei einer in Figur 3a dargestellten herkömmlichen Verklebung der Fall ist, die nur die unmittelbare Kontaktfläche zwischen der Bodenwand 14 und der zugeordneten Wandfläche 15 umfasst. Zur Verdeutlichung ist auch der ungedehnte Sensor 12 strichliniert jeweils in den Figuren 3 und 3a dargestellt.

Figur 4 zeigt schematisch die über die Mantelverklebung 13 an der Seitenwand 16b übertragbare zusätzliche, durch Pfeile 18 dargestellte Dehnung im Vergleich zu einer in Figur 4a dargestellten herkömmlichen Verklebung. Bei dem in Figuren 3 und 4 dargestellten Ausführungsbeispiel erstreckt sich die Mantelverklebung 13 über fast die gesamte Teilfläche beziehungsweise Teilhöhe der Seitenwände 16b, 16d.

## Patentansprüche

1. Injektor, aufweisend einen Injektorkörper (1) sowie einen Düsenkörper (2), wobei ein mittels einer Verklebung an dem Injektor befestigter und eine Bodenwand (14) und zumindest eine Seitenwand aufweisender Sensor (12) zur Aufnahme einer Verformung einer Wandfläche (15) des Injektors vorgesehen ist,
**dadurch gekennzeichnet, dass**
die Verklebung eine Mantelverklebung (13) ist und dass die Mantelverklebung (13) die gesamte Kontaktfläche zwischen der Bodenwand (14) des Sensors (12) und der zugewandten Wandfläche (15) des Injektors und zumindest eine Teilfläche einer Seitenwand (16a, 16b, 16c, 16d) des Sensors (12) umfasst, wobei der Sensor (12) durch Aufbringung einer Vorspannung auf die Mantelverklebung (13) auf Druck vorgespannt ist.

2. Injektor nach Anspruch 1,
**dadurch gekennzeichnet, dass** die Mantelverklebung (13) an zwei gegenüberliegenden Seitenwänden (16a, 16c; 16b, 16d) des Sensors (12) angeordnet ist.

3. Injektor nach einem der vorherigen Ansprüche,
**dadurch gekennzeichnet, dass** der Sensor (12) quaderförmig, zylinderförmig oder halbkugelförmig ausgebildet ist.

4. Injektor nach einem der vorherigen Ansprüche,
**dadurch gekennzeichnet, dass** der Sensor (12) in eine Ausnehmung (17) in dem Injektor eingesetzt ist.

5. Injektor nach einem der vorherigen Ansprüche,
**dadurch gekennzeichnet, dass** der Düsenkörper (2) eine eine Düsennadel (5) aufnehmende Bohrung (4a) aufweist, wobei die Düsennadel (5) in der Bohrung (4a) translatorisch bewegbar ist, und eine mit einem Düsenkörpersitz (8) zusammenwirkende Düsennadelspitze (7) aufweist, wobei dem Düsenkörpersitz (8) zumindest eine Düsenöffnung (9) zugeordnet ist, die gesteuert von der Düsennadel (5) mit einer Hochdruckleitung (10, 10a) für ein in dem Injektorkörper (1) und dem Düsenkörper (2) geführtes Medium verbunden ist.

6. Injektor nach einem der vorherigen Ansprüche,
**dadurch gekennzeichnet, dass** die mit dem Sensor (12) zusammenwirkende Wandfläche (15) an eine Hochdruckleitung (10) in dem Injektor angrenzt.

7. Injektor nach Anspruch 5 oder 6,
**dadurch gekennzeichnet, dass** die als Membran wirkende Wandfläche (15) parallel zu der Hochdruckleitung (10, 10a) ausgerichtet ist.

8. Injektor nach einem der vorherigen Ansprüche,
**dadurch gekennzeichnet, dass** der Injektor ein Kraftstoffinjektor ist, und dass das Medium Kraftstoff ist.

## Claims

1. Injector, having an injector body (1) and a nozzle body (2), wherein a sensor (12) which is fastened by means of an adhesive bond to the injector and which has a base wall (14) and at least one side wall is provided for recording a deformation of a wall surface (15) of the injector,
**characterized in that**
the adhesive bond is a shell adhesive bond (13), and **in that** the shell adhesive bond (13) covers the entire contact area between the base wall (14) of the sensor (12) and the facing wall surface (15) of the injector and at least a partial area of a side wall (16a, 16b, 16c, 16d) of the sensor (12), wherein the sensor (12) is subjected to pressure preloading by application of a preload to the shell adhesive bond (13).

2. Injector according to Claim 1,
**characterized in that** the shell adhesive bond (13) is arranged at two opposite side walls (16a, 16c; 16b, 16d) of the sensor (12).

3. Injector according to either of the preceding claims,
**characterized in that** the sensor (12) is of cuboidal, cylindrical or hemispherical form.

4. Injector according to any of the preceding claims, **characterized in that** the sensor (12) is inserted into a recess (17) in the injector.

5. Injector according to any of the preceding claims, **characterized in that** the nozzle body (2) has a bore (4a) which receives a nozzle needle (5), wherein the nozzle needle (5) is movable in translational fashion in the bore (4a) and has a nozzle needle tip (7) which interacts with a nozzle body seat (8), wherein the nozzle body seat (8) is assigned at least one nozzle opening (9) which is connected, in a manner controlled by the nozzle needle (5), to a high-pressure line (10, 10a) for a medium conducted in the injector body (1) and in the nozzle body (2) .

6. Injector according to any of the preceding claims, **characterized in that** the wall surface (15) that interacts with the sensor (12) adjoins a high-pressure line (10) in the injector.

7. Injector according to Claim 5 or 6,
**characterized in that** the wall surface (15) that acts as diaphragm is oriented parallel to the high-pressure line (10, 10a).

8. Injector according to any of the preceding claims, **characterized in that** the injector is a fuel injector, and **in that** the medium is fuel.

## Revendications

1. Injecteur, comprenant un corps d'injecteur (1) ainsi qu'un corps de buse (2), un capteur (12) fixé par collage à l'injecteur et comprenant une paroi inférieure (14) et au moins une paroi latérale étant prévu, lequel capteur sert à détecter une déformation d'une surface de paroi (15) de l'injecteur,
**caractérisé en ce que**
le collage est un collage d'enveloppe (13), et **en ce que** le collage d'enveloppe (13) entoure toute la surface de contact entre la paroi inférieure (14) du capteur (12) et la surface de paroi en regard (15) de l'injecteur et au moins une surface partielle d'une paroi latérale (16a, 16b, 16c, 16d) du capteur (12), le capteur (12) étant précontraint en compression par application d'une précontrainte sur le collage d'enveloppe (13).

2. Injecteur selon la revendication 1,
**caractérisé en ce que** le collage d'enveloppe (13) est disposé sur deux parois latérales opposées (16a, 16c ; 16b, 16d) du capteur (12).

3. Injecteur selon l'une quelconque des revendications précédentes,
**caractérisé en ce que** le capteur (12) est de forme parallélépipédique, cylindrique ou hémisphérique.

4. Injecteur selon l'une quelconque des revendications précédentes,
**caractérisé en ce que** le capteur (12) est inséré dans un évidement (17) dans l'injecteur.

5. Injecteur selon l'une quelconque des revendications précédentes,
**caractérisé en ce que** le corps de buse (2) comprend un alésage (4a) logeant une aiguille d'injecteur (5), l'aiguille d'injecteur (5) étant mobile en translation dans l'alésage (4a), et comprenant une pointe d'aiguille d'injecteur (7) coopérant avec un siège de corps de buse (8), au moins une ouverture de buse (9) étant associée au siège de corps de buse (8), laquelle ouverture de buse est, de manière commandée par l'aiguille d'injecteur (5), reliée à une conduite haute pression (10, 10a) pour un fluide guidé dans le corps d'injecteur (1) et le corps de buse (2).

6. Injecteur selon l'une quelconque des revendications précédentes,
**caractérisé en ce que** la surface de paroi (15) coopérant avec le capteur (12) est adjacente à une conduite haute pression (10) dans l'injecteur.

7. Injecteur selon la revendication 5 ou 6,
**caractérisé en ce que** la surface de paroi (15) agissant en tant que membrane est orientée parallèlement à la conduite haute pression (10, 10a) .

8. Injecteur selon l'une quelconque des revendications précédentes,
**caractérisé en ce que** l'injecteur est un injecteur de carburant, et **en ce que** le fluide est du carburant.
